# EUROPEAN PATENT APPLICATION

(11) **EP 4 477 580 A1**
(43) Date of publication of application: **18.12.2024**
(21) Application number: 23752301.4
(22) Date of filing: 03.02.2023
(51) Int. Cl.: B65G 1/04, B65G 1/137

(54) **WAREHOUSE MANAGEMENT SYSTEM AND METHOD**

(30) Priority: 10.02.2022 CN 202210124952; 10.02.2022 CN 202220275180 U
(71) Applicant: Beijing Geekplus Technology Co., Ltd., Chaoyang District Beijing 100102 (CN)
(72) Inventor: LI, Hongbo, Beijing 100102 (CN)
(74) Representative: Habermann, Hruschka & Schnabel
(86) International application number: PCT/CN2023/074450
(87) International publication number: WO 2023/151521

(57) **Abstract**

A warehouse management system and method are provided. The warehouse management system includes a control server (110), a carrying apparatus (120), and a workstation (130). The workstation (130) is provided with a temporary goods storage region (1301). The control server (110) is configured to determine a goods inventory location of first goods according to a quantity of the first goods hit by a to-be-processed order set, determine a first carrying apparatus for carrying the first goods and a first workstation for picking the first goods, send a first carrying instruction to the first carrying apparatus, and send a first to-be-processed order which hits the first goods in the to-be-processed order set to the first workstation. The first carrying apparatus is configured to move to the goods inventory location and carry the first goods to the first workstation in response to the first carrying instruction. The first workstation is configured to shelve the first goods to the temporary goods storage region (1301) of the first workstation, and pick the first goods from the temporary goods storage region (1301) based on the first to-be-processed order.

## Description

This application claims priority to Chinese Patent Application No. 202210124952.9 entitled "WAREHOUSE MANAGEMENT SYSTEM AND METHOD" and Chinese Patent Application No. 202220275180.4 entitled "WAREHOUSE MANAGEMENT SYSTEM", filed with the China National Intellectual Property Administration on February 10, 2022, which are incorporated herein by reference in their entireties.

### TECHNICAL FIELD

This application relates to the field of warehousing technologies, and in particular, to a warehouse management system and method.

### BACKGROUND

With the rapid development of e-commerce, e-commerce plays an increasingly important role in lives of consumers. A quantity of user orders exponentially increases every year. In addition, e-commerce becomes increasingly mature, and the users propose higher requirements for service quality of e-commerce. A processing capacity of warehouse scheduling is also undergoing a severe test.

In a previous automatic picking system, goods-to-person picking is a common mode. The so-called goods-to-person manner is based on an intelligent transport robot. The robot automatically drives directly below a target shelving unit according to order requirements and inventory information, and lifts the target shelving unit to a picking station. The picking station is equipped with an apparatus such as a display screen. A picking person puts goods into a designated container according to a prompt of the display screen to complete the picking. However, orders usually arrive continuously. A case in which the same goods are hit a plurality of times, and the goods are carried back and forth between an inventory region and a workstation a plurality of times usually occurs, which greatly affects picking efficiency.

### SUMMARY

In view of this, embodiments of this application provide a warehouse management system and method, to resolve technical defects existing in the prior art.

According to a first aspect of the embodiments of this application, a warehouse management system, a control server, a carrying apparatus, and a workstation are provided. The workstation is provided with a temporary goods storage region.

The control server is configured to determine a goods inventory location of first goods according to a quantity of the first goods hit by a to-be-processed order set, determine a first carrying apparatus for carrying the first goods and a first workstation for picking the first goods, send a first carrying instruction to the first carrying apparatus, and send a first to-be-processed order which hits the first goods in the to-be-processed order set to the first workstation.

The first carrying apparatus is configured to move to the goods inventory location and carry the first goods to the first workstation in response to the first carrying instruction.

The first workstation is configured to shelve the first goods to the temporary goods storage region of the first workstation, and pick the first goods from the temporary goods storage region according to the first to-be-processed order.

Optionally, the control server is further configured to detect an order quantity of first to-be-processed orders in the first workstation, determine a second workstation and a second carrying apparatus in a case that the order quantity is greater than a preset threshold, send a second to-be-processed order which hits the first goods in the to-be-processed order set to the second workstation, and send a second carrying instruction to the second carrying apparatus, where a distance between the second workstation and the first workstation is less than a preset distance threshold.

The second carrying apparatus is configured to, in response to the second carrying instruction, take out the first goods in a quantity corresponding to a second to-be-processed order from the temporary goods storage region of the first workstation and put the first goods in the temporary goods storage region of the second workstation.

The second workstation is configured to pick the first goods from the temporary goods storage region of the second workstation according to the second to-be-processed order.

Optionally, the control server is further configured to determine, according to the quantity of the first goods hit by the to-be-processed order set, a third workstation for picking the first goods and a fifth carrying apparatus for carrying the first goods, send a fifth carrying instruction to the fifth carrying apparatus, and send a fourth to-be-processed order which hits the first goods in the to-be-processed order set to the third workstation, where a distance between the third workstation and the first workstation is less than a preset distance threshold.

The fifth carrying apparatus is configured to move to the goods inventory location and carry the first goods to the third workstation in response to the fifth carrying instruction.

The third workstation is configured to shelve the first goods to the temporary goods storage region of the third workstation, and pick the first goods from the temporary goods storage region according to the fourth to-be-processed order.

Optionally, the system further includes an inventory region and an external inventory region. The inventory region includes a plurality of inventory holders, each of the inventory holders includes at least one storage location, each storage location is capable of accommodating at least one container, and the container is loaded with goods.

The control server is further configured to obtain a goods quantity of the first goods hit by the to-be-processed order set, determine that the goods inventory location is the inventory region in a case that the goods quantity is less than or equal to an inventory threshold, and determine that the goods inventory location is the inventory region and the external inventory region or that the goods inventory location is the external inventory region in a case that the goods quantity is greater than the inventory threshold.

Optionally, the control server is further configured to determine a first carrying sub-apparatus for carrying the first goods from the inventory region and a second carrying sub-apparatus for carrying the first goods from the external inventory region in a case that the goods quantity is greater than the inventory threshold.

Optionally, the first carrying sub-apparatus includes a container carrying apparatus or a holder carrying apparatus, and the second carrying sub-apparatus includes any one selected from a forklift, a traction apparatus, and a lifting apparatus.

Optionally, the temporary goods storage region is provided with a plurality of temporary storage locations. Each of the temporary storage locations is capable of accommodating at least one temporary storage container, and the temporary storage container is loaded with goods.

The control server is further configured to: in a case that it is detected that the quantity of the first goods in the temporary goods storage region of the first workstation is less than a temporary storage threshold, determine a goods inventory location of second goods according to a quantity of the second goods hit by the to-be-processed order set, determine a third carrying apparatus for carrying the second goods, send a third carrying instruction to the third carrying apparatus, and send a third to-be-processed order which hits the second goods in the to-be-processed order set to the first workstation.

The third carrying apparatus is configured to move to the goods inventory location of the second goods and carry the second goods to the first workstation in response to the third carrying instruction.

The first workstation is further configured to shelve the second goods to an idle temporary storage container in the temporary goods storage region of the first workstation, and pick the second goods according to the third to-be-processed order.

Optionally, the control server is further configured to: in a case that it is detected that the quantity of the first goods in the temporary goods storage region of the first workstation is less than a temporary storage threshold, determine to-be-replenished first goods according to the quantity of the first goods in a new to-be-processed order set, determine a sixth carrying apparatus for carrying the to-be-replenished first goods, send a sixth carrying instruction to the sixth carrying apparatus, and send a fifth to-be-processed order which hits the to-be-replenished first goods in the new to-be-processed order set to the first workstation.

The sixth carrying apparatus is configured to move to the goods inventory location and carry the to-be-replenished first goods to the first workstation in response to the sixth carrying instruction.

The first workstation is further configured to shelve the to-be-replenished first goods to the temporary goods storage region of the first workstation, and pick the to-be-replenished first goods from the temporary goods storage region according to the fifth to-be-processed order.

Optionally, the workstation is provided with an operation object and an order picking region, the order picking region is provided with a plurality of order storage locations, and each of the order storage locations is capable of accommodating at least one order container.

The operation object is configured to take out the first goods from the temporary goods storage region of the first workstation according to the first to-be-processed order, and put the first goods in the order container corresponding to the first to-be-processed order.

Optionally, the workstation is further provided with an operating workstation and a container loading/unloading apparatus.

The container loading/unloading apparatus is arranged between the operating workstation and the order picking region, and is configured to take out the order container corresponding to the first to-be-processed order from the order picking region and put the order container on the operating workstation, or take out the order container from the operating workstation and put the order container in the order picking region.

The operation object is further configured to put the first goods in the order container of the operating workstation.

Optionally, the control server is further configured to determine a fourth carrying apparatus and send a fourth carrying instruction to the fourth carrying apparatus.

The fourth carrying apparatus is configured to carry, in response to the fourth carrying instruction, an order container that has completed an order picking task to a designated location.

Optionally, the operation object includes an operator, a manipulator, or an automated apparatus for goods picking.

Optionally, the control server is further configured to determine location information of the first goods in the temporary goods storage region of the first workstation according to a preset condition.

The first workstation is further configured to shelve the first goods to the temporary goods storage region of the first workstation according to the location information.

Optionally, the preset condition includes at least one selected from a popularity of the first goods, a degree of association between the first goods and other goods in the temporary goods storage region, and a sequence of the to-be-processed orders in the first workstation.

According to a second aspect of the embodiments of this application, a warehouse management method is provided. The method is applied to a warehouse management system. The system includes a control server, a carrying apparatus, and a workstation. The workstation is provided with a temporary goods storage region, and the method includes:
determining, by the control server, a goods inventory location of first goods according to a quantity of the first goods hit by a to-be-processed order set, determining a first carrying apparatus for carrying the first goods and a first workstation for picking the first goods, sending a first carrying instruction to the first carrying apparatus, and sending a first to-be-processed order which hits the first goods in the to-be-processed order set to the first workstation;
in response to the first carrying instruction, moving the first carrying apparatus to the goods inventory location and carrying, by the first carrying apparatus, the first goods to the first workstation; and
shelving, by the first workstation, the first goods to the temporary goods storage region of the first workstation, and picking the first goods from the temporary goods storage region according to the first to-be-processed order.

Optionally, the method further includes:
detecting, by the control server, an order quantity of first to-be-processed orders in the first workstation, determining a second workstation and a second carrying apparatus in a case that the order quantity is greater than a preset threshold, sending a second to-be-processed order which hits the first goods in the to-be-processed order set to the second workstation, and sending a second carrying instruction to the second carrying apparatus, where a distance between the second workstation and the first workstation is less than a preset distance threshold.

The second carrying apparatus is configured to, in response to the second carrying instruction, take out the first goods in a quantity corresponding to a second to-be-processed order from the temporary goods storage region of the first workstation and put the first goods in the temporary goods storage region of the second workstation.

The second workstation is configured to pick the first goods from the temporary goods storage region of the second workstation according to the second to-be-processed order.

Optionally, the method further includes:
determining, by the control server according to the quantity of the first goods hit by the to-be-processed order set, a third workstation for picking the first goods and a fifth carrying apparatus for carrying the first goods, sending a fifth carrying instruction to the fifth carrying apparatus, and sending a fourth to-be-processed order which hits the first goods in the to-be-processed order set to the third workstation, where a distance between the third workstation and the first workstation is less than a preset distance threshold.

The fifth carrying apparatus is configured to move to the goods inventory location and carry the first goods to the third workstation in response to the fifth carrying instruction.

The third workstation is configured to shelve the first goods to the temporary goods storage region of the third workstation, and pick the first goods from the temporary goods storage region according to the fourth to-be-processed order.

Optionally, the system further includes an inventory region and an external inventory region. The inventory region includes a plurality of inventory holders, each of the inventory holders includes at least one storage location, each storage location is capable of accommodating at least one container, and the container is loaded with goods.

The method further includes:
obtaining, by the control server, a goods quantity of the first goods hit by the to-be-processed order set, determining that the goods inventory location is the inventory region in a case that the goods quantity is less than or equal to an inventory threshold, and determining that the goods inventory location is the inventory region and the external inventory region or that the goods inventory location is the external inventory region in a case that the goods quantity is greater than the inventory threshold.

Optionally, the method further includes:
determining, by the control server, a first carrying sub-apparatus for carrying the first goods from the inventory region and a second carrying sub-apparatus for carrying the first goods from the external inventory region in a case that the goods quantity is greater than the inventory threshold.

Optionally, the temporary goods storage region is provided with a plurality of temporary storage locations. Each of the temporary storage locations is capable of accommodating at least one temporary storage container, and the temporary storage container is loaded with goods.

Optionally, the method further includes:
determining, by the control server in a case that it is detected that the quantity of the first goods in the temporary goods storage region of the first workstation is less than a temporary storage threshold, a goods inventory location of second goods according to a quantity of the second goods hit by the to-be-processed order set, determining a third carrying apparatus for carrying the second goods, sending a third carrying instruction to the third carrying apparatus, and sending a third to-be-processed order which hits the second goods in the to-be-processed order set to the first workstation.

The third carrying apparatus is configured to move to the goods inventory location of the second goods and carry the second goods to the first workstation in response to the third carrying instruction.

The first workstation is configured to shelve the second goods to an idle temporary storage container in the temporary goods storage region of the first workstation, and pick the second goods according to the third to-be-processed order.

Optionally, the method further includes:
determining, by the control server in a case that it is detected that the quantity of the first goods in the temporary goods storage region of the first workstation is less than a temporary storage threshold, to-be-replenished first goods according to the quantity of the first goods hit by a new to-be-processed order set, determining a sixth carrying apparatus for carrying the to-be-replenished first goods, sending a sixth carrying instruction to the sixth carrying apparatus, and sending a fifth to-be-processed order which hits the to-be-replenished first goods in the new to-be-processed order set to the first workstation.

The sixth carrying apparatus is configured to move to the goods inventory location and carry the to-be-replenished first goods to the first workstation in response to the sixth carrying instruction.

The first workstation is configured to shelve the to-be-replenished first goods to the temporary goods storage region of the first workstation, and pick the to-be-replenished first goods from the temporary goods storage region according to the fifth to-be-processed order.

Optionally, the workstation is provided with an operation object and an order picking region, the order picking region is provided with a plurality of order storage locations, and each of the order storage locations is capable of accommodating at least one order container.

Optionally, the method further includes:
taking out, by the operation object, the first goods from the temporary goods storage region of the first workstation according to the first to-be-processed order, and putting the first goods in the order container corresponding to the first to-be-processed order.

Optionally, the workstation is further provided with an operating workstation and a container loading/unloading apparatus. The container loading/unloading apparatus is arranged between the operating workstation and the order picking region.

The container loading/unloading apparatus is configured to take out the order container corresponding to the first to-be-processed order from the order picking region, and put the order container in the operating workstation, or take out the order container from the operating workstation and put the order container in the order picking region.

The operation object is configured to put the first goods in the order container of the operating workstation.

Optionally, the method further includes:
determining, by the control server, a fourth carrying apparatus, and sending a fourth carrying instruction to the fourth carrying apparatus; and
carrying, by the fourth carrying apparatus, in response to the fourth carrying instruction, an order container that has completed an order picking task to a designated location.

Optionally, the method further includes:
determining, by the control server, location information of the first goods in the temporary goods storage region of the first workstation according to a preset condition; and
shelving, by the first workstation, the first goods to the temporary goods storage region of the first workstation according to the location information.

The warehouse dispatching system provided in the embodiments of this application includes a control server, a carrying apparatus, and a workstation. The workstation is provided with a temporary goods storage region. The control server is configured to determine a goods inventory location of first goods according to a quantity of the first goods hit by the to-be-processed order set, determine a first carrying apparatus for carrying the first goods and a first workstation for picking the first goods, send a first carrying instruction to the first carrying apparatus, and send a first to-be-processed order which hits the first goods in the to-be-processed order set to the first workstation. The first carrying apparatus is configured to move to the goods inventory location and carry the first goods to the first workstation in response to the first carrying instruction. The first workstation is configured to shelve the first goods to the temporary goods storage region of the first workstation, and pick the first goods from the temporary goods storage region according to the first to-be-processed order. Through this system, the goods hit by the order are collectively carried to the workstation and stored in the temporary goods storage region of the workstation, which saves a number of carrying times of the container storing the goods and improves picking efficiency of the goods.

### BRIEF DESCRIPTION OF THE DRAWINGS

FIG. 1 is a schematic diagram of a system structure of a warehouse management system according to an embodiment of this application.
FIG. 2 is a schematic diagram of a container loading/unloading apparatus according to an embodiment of this application.
FIG. 3 is a flowchart of a warehouse management method according to an embodiment of this application.

### REFERENCE NUMERALS

110-Control server, 111-Processor, 112-Memory, 113-Order pool, 114-Operating workstation, 120-Carrying apparatus, 130-Workstation, 1301-Temporary goods storage region, 1302-Operation object, 1303-Order picking region, 140-Container loading/unloading apparatus, 7-Frame body, 71-X-axis track, 72-Y-axis track, 2-Container access assembly.

### DETAILED DESCRIPTION

In the following description, many specific details are described for thorough understanding of this application. However, this application can be implemented in many other manners different from those described herein. A person skilled in the art may make similar promotion without departing from the connotation of this application. Therefore, this application is not limited to specific implementation disclosed below.

Terms used in one or more embodiments of this application are merely intended to describe the specific embodiments but are not intended to limit the one or more embodiments of this application. The terms "a", "said", and "the" in a singular form used in one or more embodiments of this application and the appended claims are also intended to include a plural form, unless other meanings are clearly indicated in the context. It should be further understood that the term "and/or" as used in one or more embodiments of this application means including any or all possible combinations of one or more associated listed items.

It should be understood that although terms "first," "second," and the like may be used to describe various information in one or more embodiments of this application, such information should not be limited to these terms. These terms are merely used to distinguish between information of the same type. For example, without departing from the scope of one or more embodiments of this application, first may also be referred to as second, and similarly, second may be referred to as first. Depending on the context, for example, the word "if" used herein may be interpreted as "at" or "when," or "in response to determination".

In this application, a warehouse management system and method are provided, which are successively described in detail in the following embodiments.

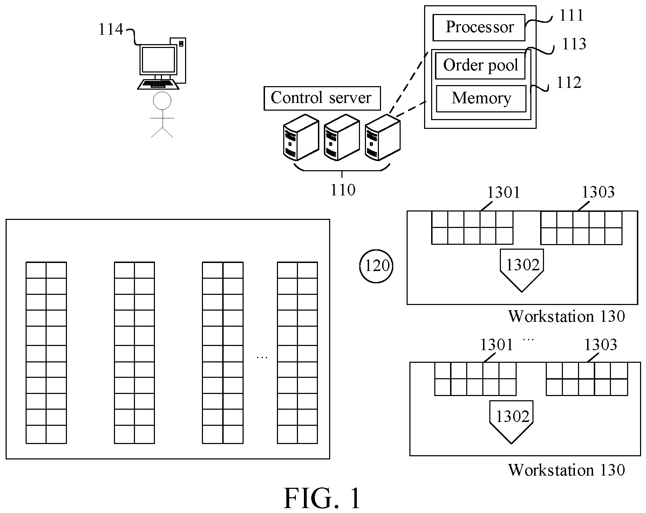

FIG. 1 is a schematic diagram of a system structure of a warehouse management system according to an embodiment of this application. The system includes a control server 110, a carrying apparatus 120, and a workstation 130. The workstation 130 is provided with a temporary goods storage region 1301.

The control server 110 is connected to each of the container access apparatus 120 through wireless communication. An operator operates the control server 110 by using an operating workstation 114. The control server 110 is a software system running on a server and having data storage and information processing capabilities, and may be wirelessly connected to the container access apparatus 120, or the like. The control server 110 may include one or more servers, and may be a centralized control architecture or a distributed computing architecture. The control server 110 is provided with a processor 111 and a memory 112. The memory 112 may be provided with an order pool 113, and the order pool 113 stores order information.

The carrying apparatus 120 is configured to carry goods to the workstation. In a practical application, the carrying apparatus varies depending on different to-be-carried contents. If a container loaded with goods is to be carried, the carrying apparatus 120 may be a container carrying apparatus (such as a container transport robot). If a movable shelving unit loaded with containers is to be carried, the carrying apparatus 120 may be a shelving unit carrying apparatus (such as a shelving unit transport robot). If stacked goods are to be carried, the carrying apparatus 120 may be a forklift, or the like. If a cage trolley loaded with goods is to be carried, the carrying apparatus 120 may be an apparatus such as a traction apparatus or a lifting apparatus.

The workstation 130 is a region for performing an order picking task. The workstation 130 is usually provided with a temporary goods storage region 1301, an operation object 1302, and an order picking region 1303. The temporary goods storage region 1301 is provided with a plurality of temporary storage locations. Each of the temporary storage locations may accommodate at least one temporary storage container. Each temporary storage container stores ordered goods. The order picking region 1303 is provided with a plurality of order storage locations. Each of the order storage locations may accommodate at least one order container. The operation object 1302 is configured to pick the goods into the order container. In a practical application, the temporary goods storage region 1301 may be a temporary storage shelving unit, the order picking region 1303 may be a seeding wall, and the operation object 1302 may be an operator, a manipulator, or another automated apparatus for picking goods.

In a specific implementation provided in this application, the control server is configured to determine a goods inventory location of first goods according to a quantity of the first goods hit by a to-be-processed order set, determine a first carrying apparatus for carrying the first goods and a first workstation for picking the first goods, send a first carrying instruction to the first carrying apparatus, and send a first to-be-processed order which hits the first goods in the to-be-processed order set to the first workstation.

The first carrying apparatus is configured to move to the goods inventory location and carry the first goods to the first workstation in response to the first carrying instruction.

The first workstation is configured to shelve the first goods to the temporary goods storage region of the first workstation, and pick the first goods from the temporary goods storage region according to the first to-be-processed order.

The to-be-processed order set may be all to-be-processed orders that have been received by the control server, or may be a part of to-be-processed orders selected from all of the to-be-processed orders according to a preset processing rule. For example, the to-be-processed orders may be picked according to an order shipment date of the to-be-processed orders, and orders in the next 12 hours from a current moment are used as a to-be-processed order set. In this application, a specific quantity of to-be-processed orders in the to-be-processed order set is not limited.

The first goods specifically refer to hit goods in a plurality of to-be-processed order sets in the to-be-processed order set. The goods inventory location of the first goods is determined according to the quantity of the first goods hit by the to-be-processed order set.

Specifically, the warehouse management system further includes an inventory region and an external inventory region. The inventory region includes a plurality of inventory holders. Each of the inventory holders includes at least one storage location, each storage location may accommodate at least one container, and the container is loaded with goods. The external inventory region specifically refers to a region arranged outside a current inventory region. For example, a current inventory warehouse has a limited capacity, but there is a large quantity of hit goods in the to-be-processed orders, which exceeds a storage capacity of the current inventory region. In this case, goods need to be transferred from the external inventory region to complete order picking.

Correspondingly, the control server 110 is configured to obtain a goods quantity of the hit first goods in the to-be-processed order set. In a case that the goods quantity is less than or equal to an inventory threshold, it may be determined that the goods inventory location is the inventory region. In a case that a goods capacity is greater than the inventory threshold, it may be determined that the goods inventory location is the inventory region and the external inventory region, or the goods inventory location is directly determined as the external inventory region. The inventory threshold may be specifically a quantity of inventories of the inventory region. It should be noted that, when the goods inventory location is the inventory region and the external inventory region, a quantity of goods may be taken out from the inventory region, and then a quantity of goods not less than a required quantity minus the quantity of goods that have been taken out from the inventory may be taken out from the external inventory region.

In an implementation provided in this application, the control server determines, according to the to-be-processed order set, that the quantity of the first goods is 100, and a current inventory quantity in the inventory region is 200, and then the inventory threshold is 200. In this case, the quantity of the first goods in the inventory region may satisfy the quantity of the first goods in the to-be-processed order set, and it may be determined that the goods inventory location of the first goods is the inventory region.

In another specific implementation provided in this application, the control server determines, according to the to-be-processed order set, that the quantity of the first goods is 100, and a current inventory quantity in the inventory region is 50, and then the inventory threshold is 50. In this case, the quantity of the first goods in the inventory region cannot satisfy the quantity of the first goods in the to-be-processed order set, and it may be determined that the inventory location of the first goods may be the inventory region and the external inventory region. To be specific, 50 goods are taken out from the inventory region, and then 50 goods are taken out from the external inventory region. It may also be determined that the inventory location of the first goods is the external inventory region, and 100 goods are transferred from the external inventory region.

After the control server determines the inventory location of the first goods, i.e., the first carrying apparatus for carrying the first goods and the first workstation for picking the first goods, the control server sends the first carrying instruction to the first carrying apparatus, and sends the first to-be-processed order in the to-be-processed order set to the first workstation. The first to-be-processed order specifically refers to an order which hits the first goods in the to-be-processed order set.

Since the goods inventory location of the first goods may be the inventory region, the external inventory region, or the inventory region and the external inventory region, the corresponding first carrying apparatus is also related to the goods inventory location. For example, when the goods inventory location is the inventory region, the first carrying apparatus is the container carrying apparatus if an inventory container in the inventory region is hit, the first carrying apparatus is the shelving unit carrying apparatus if a movable shelving unit in the inventory region is hit, and the first carrying apparatus may be an apparatus such as a forklift, a traction apparatus, or a lifting apparatus if the external inventory region is hit.

If the control server determines, according to the goods quantity of the first goods, that the goods inventory location is the inventory region and the external inventory region, a first carrying sub-apparatus and a second carrying sub-apparatus are correspondingly determined. The first carrying sub-apparatus is configured to carry the first goods from the inventory region. The second carrying sub-apparatus is configured to carry the first goods from the external inventory region.

Correspondingly, the first carrying instruction may also vary with a condition of the first carrying apparatus. If the first carrying sub-apparatus and the second carrying sub-apparatus are determined, the first carrying instruction may also be correspondingly a first carrying sub-instruction and a second carrying sub-instruction. The first carrying sub-instruction is sent to the first carrying sub-apparatus, and the second carrying sub-instruction is sent to the second carrying sub-apparatus.

Upon receipt of the first carrying instruction, the first carrying apparatus moves to the goods inventory location, carries the first goods, and carries the first goods to the first workstation in response to the first carrying instruction.

The first workstation is provided with a temporary goods storage region, and the first goods are shelved to the temporary goods storage region. After the first to-be-processed order is delivered to the first workstation, the first goods may be picked from the temporary goods storage region according to the first to-be-processed order.

In a practical application, a quantity of first workstations is determined according to goods types of the first goods, and the goods type of the first goods is determined according to a delivery popularity and a frequency of order hits. Goods whose frequency of order hits is greater than a preset first threshold are identified as Class A goods, which have a higher delivery popularity. A plurality of first workstations may be allocated to the Class A goods, to implement the ability of processing the Class A goods in the plurality of workstations and ensure that the Class A goods can be quickly delivered, thereby improving picking efficiency. Goods whose order hit frequency is less than the preset first threshold and greater than a preset second threshold are identified as Class B goods. Goods whose frequency of order hits is less than the second threshold are identified as Class C goods. The Class B goods and the Class C goods are delivered at a relatively low frequency, and the Class B goods and the Class C goods may be collectively carried to a few specific workstations for collective processing of the Class B goods and the Class C goods at the specific workstations to implement reasonable distribution of inventory picking.

Further, the operation object in the first workstation is configured to take out the first goods from the temporary goods storage region of the first workstation according to the first to-be-processed order, and put the first goods in the order container corresponding to the first to-be-processed order.

In a case that the operation object is the operator, the first workstation may also be provided with auxiliary display apparatuses such as a display screen, a tablet computer, and an electronic label to assist the operator in completing the picking of goods.

In another specific implementation provided in this application, the workstation is further provided with an operating workstation and a container loading/unloading apparatus. The container loading/unloading apparatus is arranged between the operating workstation and an order picking region, and is configured to take out the order container corresponding to the first to-be-processed order from the order picking region and put the order container on the operating workstation, or take out the order container from the operating workstation and put the order container in the order picking region.

The operating workstation is arranged between the container loading/unloading apparatus and the temporary goods storage region. After the container loading/unloading apparatus selects the order container from the order picking region and puts the order container on the operating workstation, the operation object takes out first goods from the temporary goods storage region and puts the first goods in the order container on the operating workstation to complete the order picking.

When the first carrying apparatus carries the first goods to the workstation, the first goods may be shelved to the temporary goods storage region manually or automatically. For example, the first goods on the first carrying apparatus are taken out and put in a container in the temporary goods storage region through a manipulator, or the goods on the first carrying apparatus are dumped into the container in the temporary goods storage region. Preferably, the container loading/unloading apparatus may also be arranged next to the temporary goods storage region. When the first carrying apparatus carries the inventory container or the inventory shelving unit to the workstation, the inventory container may be taken out from the first carrying apparatus by the container loading/unloading apparatus and put in the temporary goods storage region.

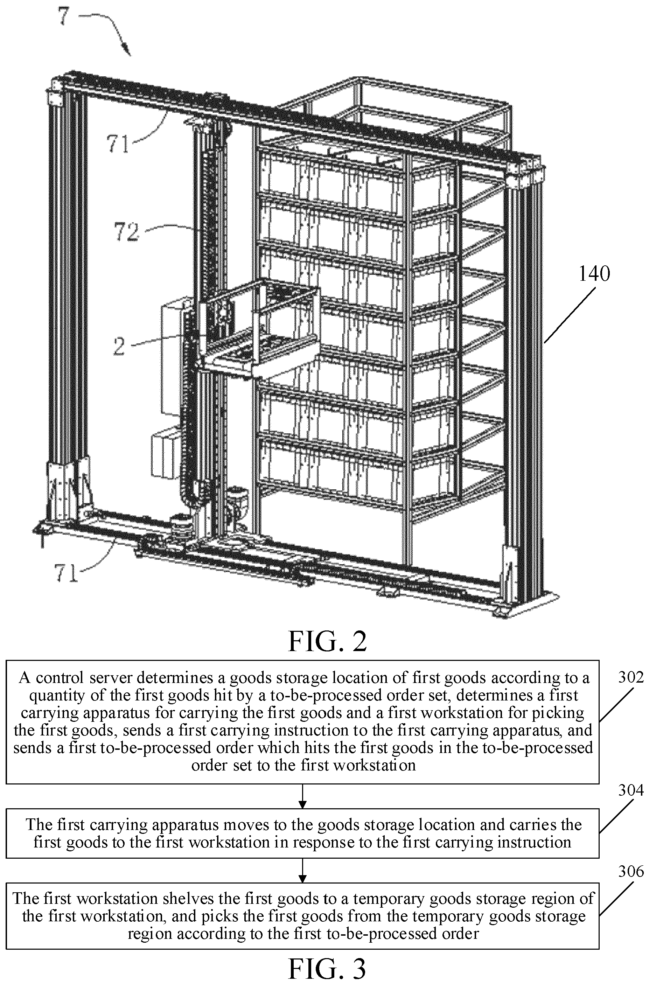

Referring to FIG. 2, FIG. 2 is a schematic diagram of a container loading/unloading apparatus according to an embodiment of this application. The container loading/unloading apparatus 140 includes a frame body 7 and a container access assembly 2. The frame body 7 includes an X-axis track 71 and a Y-axis track 72 that are perpendicular to each other. The X-axis track 71 and the Y-axis track 72 are arranged on a vertical plane. Specifically, the Y-axis track is configured to move along the X-axis track, and the container access assembly 2 is configured to move along the Y-axis track. The container access assembly 2 may also take out a container from a holder in a Z-axis direction and load the container onto a bearing assembly, or unload the container from the bearing assembly and put the container on a movable holder.

In an implementation, the frame body 7 includes a door frame assembly, and the X-axis track 71 includes a ground track structure and an overhead track structure arranged on the door frame assembly. The X-axis track 71 extends in a horizontal direction, and the Y-axis track 72 extends in a vertical direction. The Y-axis track 72 may be a column structure, and both ends of the Y-axis track 72 are respectively fitted to and guided by the ground track structure and the overhead track structure. The Y-axis track 72 moves horizontally along the ground track structure and the overhead track structure.

Specifically, two X-axis tracks 71 are each provided with an X-axis movable plate. The X-axis movable plate can move along the X-axis track 71 in the horizontal direction. Both ends of the Y-axis track 72 are fixedly connected to the two X-axis movable plates respectively. The Y-axis track 72 is provided with a Y-axis movable plate. The Y-axis movable plate can move along the Y-axis track 72 in the vertical direction. The container access assembly is fixedly connected to the Y-axis movable plate. Each of the X-axis movable plate and the Y-axis movable plate may be further provided with a guide assembly, and slides along the corresponding X-axis track 71 and Y-axis track 72 through the guide assembly.

The frame body 7 is also provided with a driving system. The driving system includes an X-axis driving unit and a Y-axis driving unit. The X-axis driving unit is configured to drive the Y-axis track 72 to move along the X-axis track 71, and the Y-axis driving unit is configured to drive the container access assembly to move along the Y-axis track 72. In this way, the container access assembly may be moved to a corresponding location, for example, a location corresponding to a target location on a shelving unit. The driving system may include a driving motor, a transmission gear, a transmission chain, a screw assembly, and the like. A person skilled in the art can perform arrangement based on the prior art to realize the foregoing functions of the driving system.

In an implementation of the present disclosure, at least two Y-axis tracks 72 may be arranged. The at least two Y-axis tracks 72 move independently relative to each other between the upper and lower X-axis tracks 71. Each Y-axis track is provided with at least one container access assembly. The container access assembly on each Y-axis track may move independently, which improves operating efficiency of a loading/unloading apparatus.

In this embodiment, the loading/unloading apparatus is configured to transfer a container on the shelving unit. The container access assembly can move on the frame body 7 along the X-axis track 71 and the Y-axis track 72 to the target location on the shelving unit.

In a practical application, the container access assembly takes out and puts the container in at least one of manners such as sucking, pushing, clamping, grabbing, hooking, scooping, and lifting.

In another specific implementation provided in this application, the control server is further configured to determine a fourth carrying apparatus and send a fourth carrying instruction to the fourth carrying apparatus.

The fourth carrying apparatus is configured to carry, in response to the fourth carrying instruction, an order container that has completed an order picking task to a designated location.

In this embodiment, the fourth carrying apparatus specifically refers to a carrying apparatus that needs to carry away, from the first workstation, the order container that completes the order picking task. The control server is configured to determine the fourth carrying apparatus and send the fourth carrying instruction to the fourth carrying apparatus. The fourth carrying apparatus is configured to carry the order container that completes the order picking task to a packaging platform, an order combination platform, or another designated location according to the fourth carrying instruction.

In a practical application, the temporary goods storage region may be arranged in the container loading/unloading apparatus, or may be located in the workstation. The temporary goods storage region located in the workstation may be a temporary storage shelving unit. Correspondingly, the temporary storage shelving unit may be provided with one temporary storage container in a depth direction of a shelf, or may be provide with a plurality of temporary storage containers. A plurality of layers of the temporary storage shelving unit may be arranged in a height direction. The temporary storage container may be put on each layer. Based on this, the control server is further configured to determine location information of the first goods in the temporary goods storage region of the first workstation according to a preset condition.

The first workstation is further configured to shelve the first goods to the temporary goods storage region of the first workstation according to the location information.

To be specific, the control server determines, according to the preset condition, location information of the first goods to be put in the temporary goods storage region after being carried to the first workstation, and then shelves the first goods to the temporary goods storage region of the first workstation according to the location information. In a practical application, the preset condition includes at least one selected from a popularity of the first goods, a degree of association between the first goods and other goods in the temporary goods storage region, and a sequence of to-be-processed orders of the first workstation.

It should be noted that, for the popularity of the first goods in this application, i.e., a delivery quantity or a delivery frequency of the first goods, a higher popularity of the goods indicates a larger delivery quantity or a higher delivery frequency of the goods. The degree of association between the goods refers to a frequency at which goods are selected together in an order task. For example, nail polish and nail polish remover usually appear in one order, which indicates a higher degree of association between the two goods. Two goods with a relatively high degree of association are put in adjacent containers, which may effectively improve picking efficiency. The sequence of the to-be-processed orders specifically refers to a sequence of orders sent to the first workstation. If an order that hits the first goods is ranked highly in the sequence, the first goods are put at a location where picking may be readily performed. If the order that hits the first goods is ranked lowly in the sequence, the first goods may be first put at a location at an edge of the temporary goods storage region.

In still another specific embodiment provided in this application, since each workstation can bear a specific quantity of orders, a load handling capacity of the first workstation also needs to be considered if all to-be-processed orders of the hit first goods are sent to the first workstation.

Based on this, the control server is further configured to detect an order quantity of first to-be-processed orders in the first workstation, determine a second workstation and a second carrying apparatus in a case that the order quantity is greater than a preset threshold, send a second to-be-processed order which hits the first goods in the to-be-processed order set to the second workstation, and send a second carrying instruction to the second carrying apparatus, where a distance between the second workstation and the first workstation is less than a preset distance threshold.

The second carrying apparatus is configured to, in response to the second carrying instruction, take out the first goods in a quantity corresponding to a second to-be-processed order from the temporary goods storage region of the first workstation and put the first goods in the temporary goods storage region of the second workstation.

The second workstation is configured to pick the first goods from the temporary goods storage region of the second workstation according to the second to-be-processed order.

The control server monitors the order quantity of the to-be-processed orders in the first workstation in real time when allocating the to-be-processed orders. If the order quantity of the first workstation is greater than the preset threshold, it indicates that the to-be-processed orders of the first workstation are saturated. In this case, the control server also needs to determine the second workstation and the second carrying apparatus, and send the second to-be-processed order which hits the first goods in the to-be-processed order set to the second workstation. Specifically, the second to-be-processed order refers to an order which hits the first goods in the to-be-processed order set and cannot be sent to the first workstation.

The distance between the second workstation hit by the control server and the first workstation is less than the preset distance threshold. For example, the second workstation is adj acent to the first workstation, so that the second workstation can readily obtain the first goods that have been shelved to the temporary goods storage region of the first workstation from the first workstation. The second carrying apparatus moves to the temporary goods storage region of the first workstation and takes out the first goods in a quantity corresponding to a second to-be-processed order in response to the second carrying instruction, and then moves to the temporary goods storage region of the second workstation, and shelves the first goods to the temporary goods storage region of the second workstation, to facilitate picking of the first goods from the temporary goods storage region of the second workstation according to the second to-be-processed order in the second workstation.

In a practical application, after the control server hits Class A goods with a higher popularity, orders of the Class A goods may be allocated to the first workstation and the second workstation according to the foregoing order allocation strategy. The control server may also control a plurality of first carrying apparatuses, directly carry the Class A goods to the first workstation and the second workstation respectively, and finally implement the operation of simultaneously picking the Class A goods in the first workstation and the second workstation, thereby improving the picking efficiency of the warehouse management system. In addition, the following scenario such as a surge of goods in the first workstation and the second workstation being in an idle state also exists. The first goods in the temporary goods storage region in the first workstation may be partially carried to the second workstation, and a task of picking the first goods from the second workstation is completed.

In another specific implementation provided in this application, a plurality of workstations may also share a temporary goods storage region. For example, two adj acent workstations share the same temporary goods storage region. The plurality of workstations may alternatively share the same temporary goods storage region. The temporary goods storage region may be connected to the plurality of workstations through a conveyor belt. The first goods may be operated in the plurality of workstations and the temporary goods storage region based on the conveyor belt, thereby improving the picking efficiency.

A case applicable to the foregoing embodiments is a scenario in which the first goods has been carried to the temporary goods storage region of the first workstation. In this scenario, the first workstation can no longer process the orders due to the surge of orders, and therefore it is necessary to determine the second workstation to assist in the order picking. To further improve the picking efficiency of goods, the to-be-processed orders of the hit first goods may be directly split during allocation of the to-be-processed orders. For example, a large quantity of first goods in the to-be-processed order set are hit, which significantly exceeds loads of one workstation. In this case, the control server may directly determine a plurality of workstations for picking goods according to the quantity of the first goods.

Based on this, the control server is further configured to determine a third workstation for picking the first goods and a fifth carrying apparatus for carrying the first goods according to the quantity of the first goods hit by the to-be-processed order set, send a fifth carrying instruction to the fifth carrying apparatus, and send a fourth to-be-processed order which hits the first goods in the to-be-processed order set to the third workstation, where a distance between the third workstation and the first workstation is less than a preset distance threshold.

The fifth carrying apparatus is configured to move to the goods inventory location and carry the first goods to the third workstation in response to the fifth carrying instruction.

The third workstation is configured to shelve the first goods to the temporary goods storage region of the third workstation, and pick the first goods from the temporary goods storage region according to the fourth to-be-processed order.

In this scenario, the control server is configured to determine not only the first workstation but also the third workstation according to the quantity of the first goods when allocating the to-be-processed orders, determine the fifth carrying apparatus for carrying the first goods, and send the fourth to-be-processed order which hits the first goods in the to-be-processed orders to the third workstation. To be specific, the control server is configured to determine, according to the quantity of the hit first goods, that the workstations for picking the first goods are the first workstation and the third workstation, and also determine that the first carrying apparatus carries the first goods to the temporary goods storage region of the first workstation. The fifth carrying apparatus is configured to carry the first goods to the temporary goods storage region of the third workstation, send the first to-be-processed order which hits the first goods in the to-be-processed order set to the first workstation, and send the fourth to-be-processed order which hits the first goods to the third workstation, so that the first goods are picked from both the first workstation and the third workstation. It should be noted that in a practical application, a quantity of the third workstations may be determined according to an actual condition. For example, it may be determined that one or more third workstations are arranged.

The fifth carrying apparatus is configured to carry the first goods from the goods inventory location of the first goods to the third workstation in response to the fifth carrying instruction, and shelve the first goods to the temporary goods storage region of the third workstation. The goods inventory location of the first goods is the same as the goods inventory location determined in the foregoing embodiments. Details are not described herein again.

In the third workstation, the first goods are taken out from the temporary goods storage region of the third workstation according to the fourth to-be-processed order, and put in a corresponding container to complete picking of the first goods.

The foregoing embodiments are descriptions of different scenarios in which the first goods are shelved to the temporary goods storage region of the workstation. During picking of the first goods, the control server further monitors a stock condition of the goods in each workstation in real time and makes a corresponding adjustment according to the stock condition.

Based on this, the control server is further configured to: in a case that it is detected that the quantity of the first goods in the temporary goods storage region of the first workstation is less than a temporary storage threshold, determine a goods inventory location of second goods according to a quantity of the second goods hit by the to-be-processed order set, determine a third carrying apparatus for carrying the second goods, send a third carrying instruction to the third carrying apparatus, and send a third to-be-processed order which hits the second goods in the to-be-processed order set to the first workstation.

The third carrying apparatus is configured to move to the goods inventory location of the second goods and carry the second goods to the first workstation in response to the third carrying instruction.

The first workstation is further configured to shelve the second goods to an idle temporary storage container in the temporary goods storage region of the first workstation, and pick the second goods according to the third to-be-processed order.

In this scenario, the first goods perform a picking operation in the first workstation. With the passage of time, when the control server detects that the quantity of the first goods in the temporary goods storage region of the first workstation is less than the temporary storage threshold, in this case, the order which hits the first goods in the to-be-processed order set is also less than the threshold, and the goods inventory location of the second goods may be determined according to a quantity of the second goods hit by the to-be-processed order set. To be specific, in a case that picking of the first goods is almost finished, and no subsequent new to-be-processed order hits the first goods or a subsequent new to-be-processed order hits few first goods, second goods with a relatively high hit rate of a next to-be-processed order may be determined, and the second goods are put in the first workstation for picking.

Therefore, after the goods inventory location of the second goods is determined, the control server also needs to determine the third carrying apparatus for carrying the second goods, send the third carrying instruction to the third carrying apparatus, and send the third to-be-processed order which hits the second goods in the to-be-processed order set to the first workstation. It should be noted that a type of the third carrying apparatus is related to the goods inventory location of the second goods and a carrier loaded with the goods. For details about selection of the third carrying apparatus, reference is made to the relevant description of the first carrying apparatus described above. The details are not described herein again.

The third carrying apparatus is configured to, according to the third carrying instruction, move to the goods inventory location of the second goods, carry the second goods to the first workstation, and shelve the second goods to the temporary goods storage region of the first workstation, so that the first workstation may pick the second goods according to the third to-be-processed order.

The above is the case that the quantity of the first goods in the first workstation is less than the temporary storage threshold, and the order which hits the first goods in the to-be-processed order set is also less than the threshold. However, in a practical application, unprocessed orders are increasing at any time. To be specific, a new to-be-processed order set is to be generated with the passage of time. The new to-be-processed order set means new to-be-processed orders that arrive after the to-be-processed order set. If the new to-be-processed order set also hits the first goods, a replenishment operation needs to be performed on the first goods.

Based on this, the control server is further configured to: in a case that it is detected that the quantity of the first goods in the temporary goods storage region of the first workstation is less than a temporary storage threshold, determine to-be-replenished first goods according to the quantity of the first goods in a new to-be-processed order set, determine a sixth carrying apparatus for carrying the to-be-replenished first goods, send a sixth carrying instruction to the sixth carrying apparatus, and send a fifth to-be-processed order which hits the to-be-replenished first goods in the new to-be-processed order set to the first workstation.

The sixth carrying apparatus is configured to move to the goods inventory location and carry the to-be-replenished first goods to the first workstation in response to the sixth carrying instruction.

The first workstation is further configured to shelve the to-be-replenished first goods to the temporary goods storage region of the first workstation, and pick the to-be-replenished first goods from the temporary goods storage region according to the fifth to-be-processed order.

In this scenario, although the control server detects that the quantity of the first goods in the temporary goods storage region of the first workstation is less than the temporary storage threshold, it is determined according to the quantity of the first goods hit by the new to-be-processed order set that a large quantity of subsequent orders hit the first goods. However, in this case, the quantity of the first goods in the temporary goods storage region of the first workstation is insufficient, and the to-be-replenished first goods are determined. The to-be-replenished first goods need to be carried from the goods inventory location to the first workstation. Therefore, the sixth carrying apparatus for carrying the to-be-replenished first goods is determined, and the sixth carrying instruction is sent. In addition, the fifth to-be-processed order which hits the to-be-replenished first goods in the new to-be-processed order set also needs to be sent to the first workstation.

The sixth carrying apparatus is configured to carry the to-be-replenished first goods from the goods inventory location of the to-be-replenished first goods to the first workstation in response to the sixth carrying instruction, and shelve the to-be-replenished first goods to the temporary goods storage region of the first workstation. The goods inventory location of the first goods is the same as the goods inventory location determined in the foregoing embodiments. Details are not described herein again. The picking of the first goods is continued in the first workstation.

Through the warehouse management system provided in this application, the workstation is provided with the temporary goods storage region for storing the goods hit by the to-be-processed order, which avoids frequent carrying of goods between the goods inventory location and the workstation and improves the picking efficiency.

Next, the goods inventory location of the goods is determined according to the quantity of the goods hit by the to-be-processed order set, which may be convenient to carry the goods to the workstation as much as possible. The goods are collectively put at one workstation, orders that hit the goods are sent to the workstation, and to-be-processed orders that hit the goods are collectively processed at the workstation, which also effectively improves picking efficiency of the orders.

Therefore, if a surge in the to-be-processed orders of the workstation occurs, another workstation may be found around the workstation to help pick the goods. A source of the goods may be either the temporary goods storage region of a previous workstation or the goods inventory location of the goods. When the previous workstation cannot process the orders, a plurality of workstations may be selected for collaborative parallel processing, which further improves the picking efficiency of the orders.

Finally, whether the goods need to be replenished may also be determined according to the new to-be-processed order set. If the goods are also hit by the new to-be-processed order set, the replenishment operation needs to be performed. If new goods are hit by the new to-be-processed order set, the new goods may be shelved to the temporary goods storage region of the workstation, which improves the picking efficiency of the to-be-processed orders.

Referring to FIG. 3, FIG. 3 is a flowchart of a warehouse management method according to an embodiment of this application. The method is applied to the warehouse management system provided in the foregoing embodiment. The system includes a control server, a carrying apparatus, and a workstation. The workstation is provided with a temporary goods storage region. The method includes the following steps:
Step 302: A control server determines a goods inventory location of first goods according to a quantity of the first goods hit by a to-be-processed order set, determines a first carrying apparatus for carrying the first goods and a first workstation for picking the first goods, sends a first carrying instruction to the first carrying apparatus, and sends a first to-be-processed order which hits the first goods in the to-be-processed order set to the first workstation.
Step 304: The first carrying apparatus moves to the goods inventory location and carries the first goods to the first workstation in response to the first carrying instruction.
Step 306: The first workstation shelves the first goods to the temporary goods storage region of the first workstation, and picks the first goods from the temporary goods storage region according to the first to-be-processed order.

Optionally, the method further includes:
detecting, by the control server, an order quantity of first to-be-processed orders in the first workstation, determining a second workstation and a second carrying apparatus in a case that the order quantity is greater than a preset threshold, sending a second to-be-processed order which hits the first goods in the to-be-processed order set to the second workstation, and sending a second carrying instruction to the second carrying apparatus, where a distance between the second workstation and the first workstation is less than a preset distance threshold.

The second carrying apparatus is configured to, in response to the second carrying instruction, take out the first goods in a quantity corresponding to a second to-be-processed order from the temporary goods storage region of the first workstation and put the first goods in the temporary goods storage region of the second workstation.

The second workstation is configured to pick the first goods from the temporary goods storage region of the second workstation according to the second to-be-processed order.

Optionally, the method further includes:
determining, by the control server according to the quantity of the first goods hit by the to-be-processed order set, a third workstation for picking the first goods and a fifth carrying apparatus for carrying the first goods, sending a fifth carrying instruction to the fifth carrying apparatus, and sending a fourth to-be-processed order which hits the first goods in the to-be-processed order set to the third workstation, where a distance between the third workstation and the first workstation is less than a preset distance threshold.

The fifth carrying apparatus is configured to move to the goods inventory location and carry the first goods to the third workstation in response to the fifth carrying instruction.

The third workstation is configured to shelve the first goods to the temporary goods storage region of the third workstation, and pick the first goods from the temporary goods storage region according to the fourth to-be-processed order.

Optionally, the system further includes an inventory region and an external inventory region. The inventory region includes a plurality of inventory holders, each of the inventory holders includes at least one storage location, each storage location is capable of accommodating at least one container, and the container is loaded with goods.

The method further includes:
obtaining, by the control server, a goods quantity of the first goods hit by the to-be-processed order set, determining that the goods inventory location is the inventory region in a case that the goods quantity is less than or equal to an inventory threshold, and determining that the goods inventory location is the inventory region and the external inventory region or that the goods inventory location is the external inventory region in a case that the goods quantity is greater than the inventory threshold.

Optionally, the method further includes:
determining, by the control server, a first carrying sub-apparatus for carrying the first goods from the inventory region and a second carrying sub-apparatus for carrying the first goods from the external inventory region in a case that the goods quantity is greater than the inventory threshold.

Optionally, the temporary goods storage region is provided with a plurality of temporary storage locations. Each of the temporary storage locations is capable of accommodating at least one temporary storage container, and the temporary storage container is loaded with goods.

Optionally, the method further includes:
determining, by the control server in a case that it is detected that the quantity of the first goods in the temporary goods storage region of the first workstation is less than a temporary storage threshold, a goods inventory location of second goods according to a quantity of the second goods hit by the to-be-processed order set, determining a third carrying apparatus for carrying the second goods, sending a third carrying instruction to the third carrying apparatus, and sending a third to-be-processed order which hits the second goods in the to-be-processed order set to the first workstation.

The third carrying apparatus is configured to move to the goods inventory location of the second goods and carry the second goods to the first workstation in response to the third carrying instruction.

The first workstation is configured to shelve the second goods to an idle temporary storage container in the temporary goods storage region of the first workstation, and pick the second goods according to the third to-be-processed order.

Optionally, the method further includes:
determining, by the control server in a case that it is detected that the quantity of the first goods in the temporary goods storage region of the first workstation is less than a temporary storage threshold, to-be-replenished first goods according to the quantity of the first goods hit by a new to-be-processed order set, determining a sixth carrying apparatus for carrying the to-be-replenished first goods, sending a sixth carrying instruction to the sixth carrying apparatus, and sending a fifth to-be-processed order which hits the to-be-replenished first goods in the new to-be-processed order set to the first workstation.

The sixth carrying apparatus is configured to move to the goods inventory location and carry the to-be-replenished first goods to the first workstation in response to the sixth carrying instruction.

The first workstation is configured to shelve the to-be-replenished first goods to the temporary goods storage region of the first workstation, and pick the to-be-replenished first goods from the temporary goods storage region according to the fifth to-be-processed order.

Optionally, the workstation is provided with an operation object and an order picking region, the order picking region is provided with a plurality of order storage locations, and each of the order storage locations is capable of accommodating at least one order container.

Optionally, the method further includes:
taking out, by the operation object, the first goods from the temporary goods storage region of the first workstation according to the first to-be-processed order, and putting the first goods in the order container corresponding to the first to-be-processed order.

Optionally, the workstation is further provided with an operating workstation and a container loading/unloading apparatus 140. The container loading/unloading apparatus is arranged between the operating workstation and the order picking region.

The container loading/unloading apparatus is configured to take out the order container corresponding to the first to-be-processed order from the order picking region, and put the order container in the operating workstation, or take out the order container from the operating workstation and put the order container in the order picking region.

The operation object is configured to put the first goods in the order container of the operating workstation.

Optionally, the method further includes:
determining, by the control server, a fourth carrying apparatus, and sending a fourth carrying instruction to the fourth carrying apparatus; and
carrying, by the fourth carrying apparatus, in response to the fourth carrying instruction, an order container that has completed an order picking task to a designated location.

Optionally, the method further includes:
determining, by the control server, location information of the first goods in the temporary goods storage region of the first workstation according to a preset condition; and
shelving, by the first workstation, the first goods to the temporary goods storage region of the first workstation according to the location information.

Through the warehouse management method provided in this application, the workstation is provided with the temporary goods storage region for storing the goods hit by the to-be-processed order, which avoids frequent carrying of goods between the goods inventory location and the workstation and improves the picking efficiency.

Next, the goods inventory location of the goods is determined according to the quantity of the goods hit by the to-be-processed order set, which may be convenient to carry the goods to the workstation as much as possible. The goods are collectively put at one workstation, orders that hit the goods are sent to the workstation, and to-be-processed orders that hit the goods are collectively processed at the workstation, which also effectively improves picking efficiency of the orders.

Therefore, if a surge in the to-be-processed orders of the workstation occurs, another workstation may be found around the workstation to help pick the goods. A source of the goods may be either the temporary goods storage region of a previous workstation or the goods inventory location of the goods. When the previous workstation cannot process the orders, a plurality of workstations may be selected for collaborative parallel processing, which further improves the picking efficiency of the orders.

Finally, it may also be determined according to the new to-be-processed order set whether the goods need to be replenished. If the goods are also hit by the new to-be-processed order set, the replenishment operation needs to be performed. If new goods are hit by the new to-be-processed order set, the new goods may be shelved to the temporary goods storage region of the workstation, which improves the picking efficiency of the to-be-processed orders.

The specific embodiments of this application are described above. Other embodiments fall within the scope of the appended claims. In some cases, the actions or steps described in the claims may be performed in a sequence different from that in the embodiments, and desired results may still be achieved. In addition, the processes depicted in the accompanying drawings are not necessarily performed in a specific sequence or sequential order to achieve the desired results. In some implementations, multitasking and parallel processing are also possible or may be advantageous.

It should be noted that, for brief description, the foregoing method embodiments are described as a series of action combinations. However, it is to be appreciated by a person skilled in the art that this application is not limited to the described sequence of the actions, because some steps may be performed in another sequence or simultaneously according to this application. In addition, it is to be appreciated by a person skilled in the art that the embodiments described in the specification are all preferred embodiments, and the involved actions and modules are not necessary for this application.

In the foregoing embodiments, the descriptions of the embodiments have respective emphasis. For a part that is not described in detail in an embodiment, reference may be made to the related descriptions of other embodiments.

The preferred embodiments of this application disclosed above are only used to assist in elaboration of this application. Optional embodiments do not provide an exhaustive description of all details and do not limit the present invention to only the specific implementations described. Obviously, many modifications and changes may be made according to the contents of this application. These embodiments are selected and specifically described in this specification to better explain the principles and practical applications of this application, so that a person skilled in the art can better understand and make good use of this application. This application is limited only by the claims and the full scope and equivalents thereof.

## Claims

1. A warehouse management system, comprising a control server, a carrying apparatus, and a workstation, the workstation being provided with a temporary goods storage region, wherein
the control server is configured to determine a goods inventory location of first goods according to a quantity of the first goods hit by a to-be-processed order set, determine a first carrying apparatus for carrying the first goods and a first workstation for picking the first goods, send a first carrying instruction to the first carrying apparatus, and send a first to-be-processed order which hits the first goods in the to-be-processed order set to the first workstation;
the first carrying apparatus is configured to move to the goods inventory location and carry the first goods to the first workstation in response to the first carrying instruction; and
the first workstation is configured to shelve the first goods to the temporary goods storage region of the first workstation, and pick the first goods from the temporary goods storage region according to the first to-be-processed order.

2. The warehouse management system according to claim 1, wherein the control server is further configured to detect an order quantity of the first to-be-processed order in the first workstation, determine a second workstation and a second carrying apparatus in a case that the order quantity is greater than a preset threshold, send a second to-be-processed order which hits the first goods in the to-be-processed order set to the second workstation, and send a second carrying instruction to the second carrying apparatus, wherein a distance between the second workstation and the first workstation is less than a preset distance threshold;
the second carrying apparatus is configured to, in response to the second carrying instruction, take out the first goods in a quantity corresponding to a second to-be-processed order from the temporary goods storage region of the first workstation, and put the first goods in the temporary goods storage region of the second workstation; and
the second workstation is configured to pick the first goods from the temporary goods storage region of the second workstation according to the second to-be-processed order.

3. The warehouse management system according to claim 1, wherein the control server is further configured to determine, according to the quantity of the first goods hit by the to-be-processed order set, a third workstation for picking the first goods and a fifth carrying apparatus for carrying the first goods, send a fifth carrying instruction to the fifth carrying apparatus, and send a fourth to-be-processed order which hits the first goods in the to-be-processed order set to the third workstation, wherein a distance between the third workstation and the first workstation is less than a preset distance threshold;
the fifth carrying apparatus is configured to move to the goods inventory location and carry the first goods to the third workstation in response to the fifth carrying instruction; and
the third workstation is configured to shelve the first goods to the temporary goods storage region of the third workstation, and pick the first goods from the temporary goods storage region according to the fourth to-be-processed order.

4. The warehouse management system according to claim 1, further comprising an inventory region and an external inventory region, wherein the inventory region comprises a plurality of inventory holders, each of the inventory holders comprises at least one storage location, each storage location is capable of accommodating at least one container, and the container is loaded with goods; and
the control server is further configured to obtain a goods quantity of the first goods hit by the to-be-processed order set, determine that the goods inventory location is the inventory region in a case that the goods quantity is less than or equal to an inventory threshold, and determine that the goods inventory location is the inventory region and the external inventory region or that the goods inventory location is the external inventory region in a case that the goods quantity is greater than the inventory threshold.

5. The warehouse management system according to claim 4, wherein the control server is further configured to determine a first carrying sub-apparatus for carrying the first goods from the inventory region and a second carrying sub-apparatus for carrying the first goods from the external inventory region in a case that the goods quantity is greater than the inventory threshold.

6. The warehouse management system according to claim 5, wherein the first carrying sub-apparatus comprises a container carrying apparatus or a holder carrying apparatus, and the second carrying sub-apparatus comprises any one selected from a forklift, a traction apparatus, and a lifting apparatus.

7. The warehouse management system according to claim 1, wherein the temporary goods storage region is provided with a plurality of temporary storage locations, each of the temporary storage locations is capable of accommodating at least one temporary storage container, and the temporary storage container is loaded with goods;
the control server is further configured to: in a case that it is detected that the quantity of the first goods in the temporary goods storage region of the first workstation is less than a temporary storage threshold, determine a goods inventory location of second goods according to a quantity of the second goods hit by the to-be-processed order set, determine a third carrying apparatus for carrying the second goods, send a third carrying instruction to the third carrying apparatus, and send a third to-be-processed order which hits the second goods in the to-be-processed order set to the first workstation;
the third carrying apparatus is configured to move to the goods inventory location of the second goods and carry the second goods to the first workstation in response to the third carrying instruction; and
the first workstation is further configured to shelve the second goods to an idle temporary storage container in the temporary goods storage region of the first workstation, and pick the second goods according to the third to-be-processed order.

8. The warehouse management system according to claim 1, wherein the control server is further configured to: in a case that it is detected that the quantity of the first goods in the temporary goods storage region of the first workstation is less than a temporary storage threshold, determine to-be-replenished first goods according to the quantity of the first goods hit by a new to-be-processed order set, determine a sixth carrying apparatus for carrying the to-be-replenished first goods, send a sixth carrying instruction to the sixth carrying apparatus, and send a fifth to-be-processed order which hits the to-be-replenished first goods in the new to-be-processed order set to the first workstation;
the sixth carrying apparatus is configured to move to the goods inventory location and carry the to-be-replenished first goods to the first workstation in response to the sixth carrying instruction; and
the first workstation is further configured to shelve the to-be-replenished first goods to the temporary goods storage region of the first workstation, and pick the to-be-replenished first goods from the temporary goods storage region according to the fifth to-be-processed order.

9. The warehouse management system according to claim 1, wherein the workstation is provided with an operation object and an order picking region, the order picking region is provided with a plurality of order storage locations, and each of the order storage locations is capable of accommodating at least one order container; and
the operation object is configured to take out the first goods from the temporary goods storage region of the first workstation according to the first to-be-processed order, and put the first goods in the order container corresponding to the first to-be-processed order.

10. The warehouse management system according to claim 9, wherein the workstation is further provided with an operating workstation and a container loading/unloading apparatus;
the container loading/unloading apparatus is arranged between the operating workstation and the order picking region, and is configured to take out the order container corresponding to the first to-be-processed order from the order picking region and put the order container on the operating workstation, or take out the order container from the operating workstation and put the order container in the order picking region; and
the operation object is further configured to put the first goods in the order container of the operating workstation.

11. The warehouse management system according to claim 9, wherein the control server is further configured to determine a fourth carrying apparatus and send a fourth carrying instruction to the fourth carrying apparatus; and
the fourth carrying apparatus is configured to carry, in response to the fourth carrying instruction, an order container that has completed an order picking task to a designated location.

12. The warehouse management system according to claim 9, wherein the operation object comprises an operator, a manipulator, or an automated apparatus for goods picking.

13. The warehouse management system according to claim 1, wherein the control server is further configured to determine location information of the first goods in the temporary goods storage region of the first workstation according to a preset condition; and
the first workstation is further configured to shelve the first goods to the temporary goods storage region of the first workstation according to the location information.

14. The warehouse management system according to claim 13, wherein the preset condition comprises at least one selected from a popularity of the first goods, a degree of association between the first goods and other goods in the temporary goods storage region, and a sequence of the to-be-processed orders in the first workstation.

15. The warehouse management system according to claim 1, wherein at least two workstations share a same temporary goods storage region.

16. A warehouse management method, applied to a warehouse management system, wherein the system comprises a control server, a carrying apparatus, and a workstation, the workstation is provided with a temporary goods storage region, and the method comprises:
determining, by the control server, a goods inventory location of first goods according to a quantity of the first goods hit by a to-be-processed order set, determining a first carrying apparatus for carrying the first goods and a first workstation for picking the first goods, sending a first carrying instruction to the first carrying apparatus, and sending a first to-be-processed order which hits the first goods in the to-be-processed order set to the first workstation;
in response to the first carrying instruction, moving the first carrying apparatus to the goods inventory location and carrying, by the first carrying apparatus, the first goods to the first workstation; and
shelving, by the first workstation, the first goods to the temporary goods storage region of the first workstation, and picking the first goods from the temporary goods storage region according to the first to-be-processed order.
